# FASCICULE DE BREVET EUROPEEN

(11) **EP 1 205 376 B1**
(45) Date de publication et mention de la délivrance du brevet: **27.10.2004**
(21) Numéro de dépôt: 01402875.7
(22) Date de dépôt: 08.11.2001
(51) Int. Cl.: B62D 25/02, B62D 29/00

(54) **Longeron de bas de caisse d'un flanc de carrosserie de véhicule automobile**
Seitenschweller eines Kraftfahrzeugs
Vehicle side sill

(30) Priorité: 14.11.2000 FR 0014647
(43) Date de publication de la demande: 15.05.2002
(73) Titulaire: Peugeot Citroen Automobiles SA, 92200 Neuilly sur Seine (FR)
(72) Inventeur: Masson, Patrick-Jean, 92500 Rueil-Malmaison (FR)
(74) Mandataire: Lanceplaine, Jean-Claude

(56) Documents cités:
- DE-A- 4 014 385
- DE-A- 19 519 779
- DE-A- 19 538 844
- US-A- 4 826 238

## Description

La présente invention est relative à un longeron de bas de caisse d'un flanc de carrosserie de véhicule automobile et à un flanc de carrosserie comportant un tel longeron.

Les ossatures des flancs de véhicule automobile sont formées par plusieurs éléments métalliques de carrosserie qui déterminent au moins ouverture destinée à recevoir une porte du véhicule.

Les éléments comprennent un arc de pavillon, un longeron de bas de caisse et un montant central reliant cet arc de pavillon à ce longeron. Les extrémités avant de l'arc de pavillon et du longeron sont reliées entre elles par une doublure d'aile avant et par un renfort de pied avant et les extrémités arrière dudit arc de pavillon et dudit longeron sont reliées entre elles par une doublure d'aile arrière et par un passage de roue arrière de façon à former une structure rigide.

Ces différents éléments sont le plus souvent réalisés par emboutissage d'une tôle en acier et reliés les uns aux autres par des pièces de liaison, comme par exemple des goussets ou des équerres soudés sur lesdits éléments, voir à ce sujet l'exposé du document DE-A-19519779, qui couvre le préambule de la revendication 1.

Or, l'emboutissage de ces éléments nécessite des outils coûteux à la fois en raison des grandes dimensions et de la complexité des pièces du fait qu'elles doivent répondre aux critères de chocs de plus en plus sévères.

Par ailleurs, la tendance actuelle des constructeurs de véhicules automobiles est de réduire le poids de ces véhicules.

Une des solutions envisagées consiste à utiliser des tôles d'acier de plus en plus minces ainsi que des tôles à hautes limites élastiques, ce qui pose des problèmes connexes d'emboutissage et de résistance mécanique.

L'invention a pour but d'éviter ces inconvénients en proposant un longeron de bas de caisse d'un flanc de carrosserie de véhicule automobile qui permet une notable diminution du poids de cet élément, tout en conservant au moins inchangé la résistance structurelle de cet élément ou en l'accroissant comparativement aux éléments utilisés jusqu'à présent.

L'invention a donc pour objet un longeron de bas de caisse d'un flanc de carrosserie de véhicule automobile, ledit flanc comprenant au moins une ouverture délimitée par un arc de pavillon, le longeron de bas de caisse et un montant central reliant ledit arc de pavillon et ledit longeron, caractérisé en ce qu'il est formé par une pièce monobloc comportant un profilé en aluminium ou ses alliages, présentant, sur sa longueur, des portions d'épaisseur de parois variable en fonction de la rigidité à obtenir dans des zones déterminées.

Selon d'autres caractéristiques de l'invention :
- le profilé comporte une partie centrale creuse à section fermée et délimitée d'un côté par une paroi sensiblement plane,
- la paroi est prolongée, sur chacun de ses bords latéraux, par une feuillure,
- l'une des feuillures comporte une découpe de centrage du montant central, ,
- la partie centrale du profilé comporte, au-dessous de la découpe, une lumière de positionnement du montant central,
- l'autre desdites feuillures comporte dans sa partie avant et dans sa partie arrière, une découpe de centrage d'un organe de levage du véhicule,
- le longeron est réalisé par profilage ou hydroformage ou extrusion.

L'invention a également pour objet un flanc de carrosserie de véhicule automobile, caractérisé en ce qu'il comporte un longeron de bas de caisse tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un flanc de véhicule automobile comportant un longeron de bas de caisse conforme à l'invention,

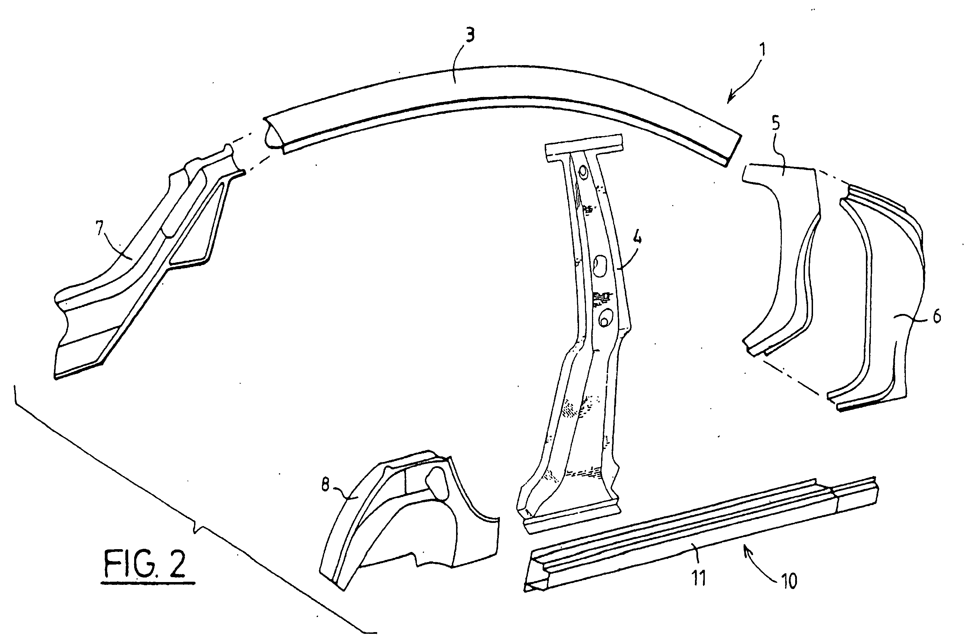

- la Fig. 2 est une vue schématique en perspective éclatée du flanc représenté à la Fig. 1,
- la Fig. 3 est une vue schématique en perspective d'un longeron de bas de caisse conforme à l'invention.

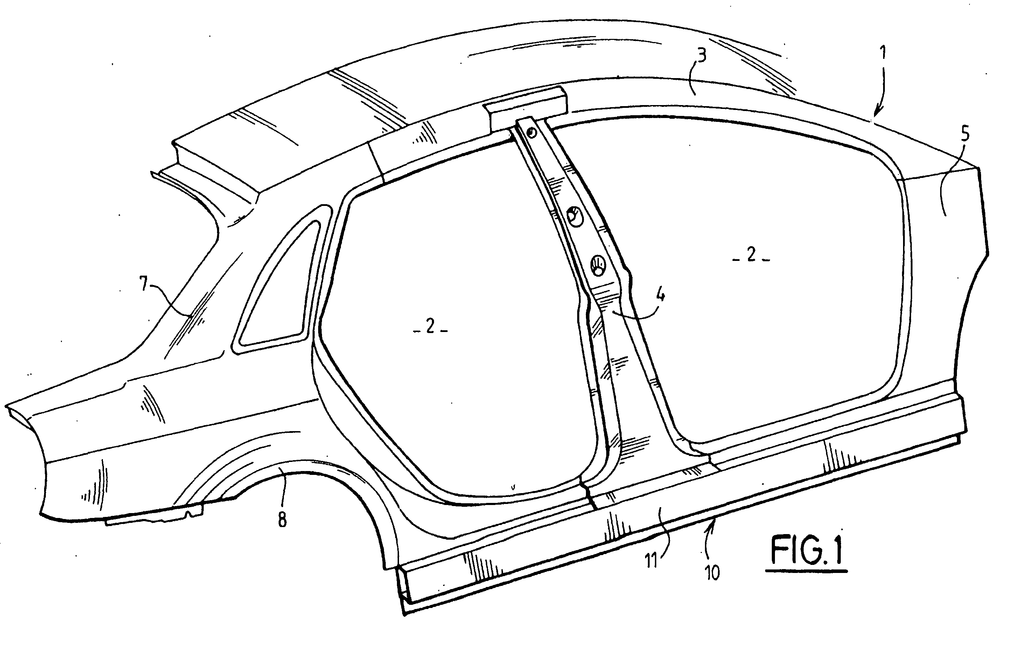

Sur la Fig. 1, on a représenté schématiquement un flanc 1 de carrosserie de véhicule automobile.

Dans l'exemple de réalisation représenté sur cette figure, le flanc 1 comporte deux ouvertures 2 destinées à recevoir les portes du véhicule et qui sont délimitées, en partie supérieure par un arc de pavillon 3, en partie inférieure par un longeron de bas de caisse 10, conforme à l'invention, et en partie médiane par un montant central 4.

Les extrémités avant de l'arc de pavillon 3 et du longeron 10 sont reliées entre elles par une doublure d'aile avant 5 et par un renfort de pied avant 6 et les extrémités arrière dudit arc de pavillon 3 et dudit longeron 10 sont reliées entre elles par une doublure d'aile arrière 7 et par un passage de roue arrière 8 de façon à former une structure rigide.

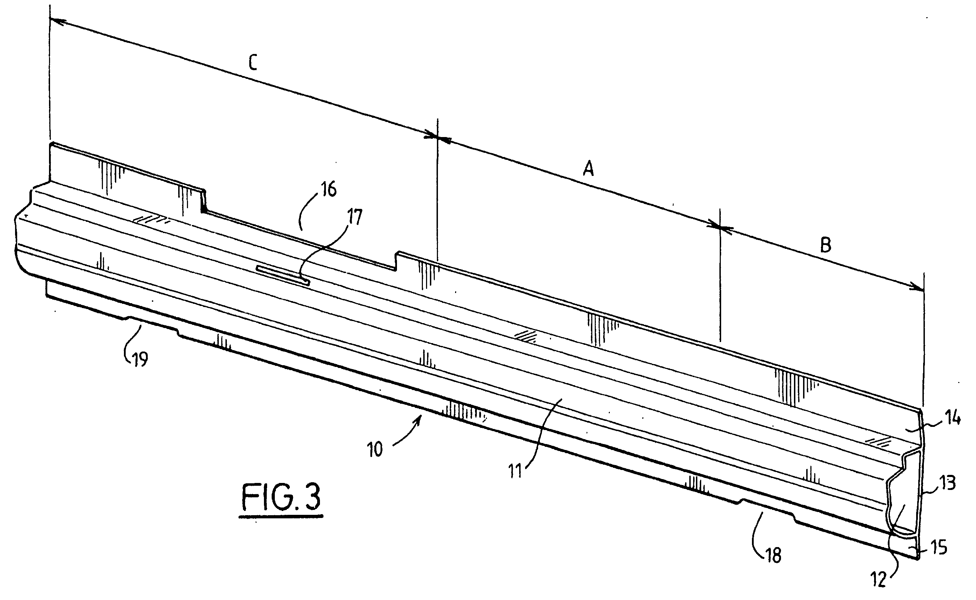

En se reportant maintenant à la Fig. 3, on va décrire le longeron de bas de caisse 10.

Ce longeron 10 est formé par une pièce monobloc comportant un profilé 11 en aluminium ou ses alliages présentant, sur sa longueur, des portions d'épaisseur de parois variable en fonction de la rigidité à obtenir dans des zones déterminées.

Par exemple, le profilé 11 comporte une zone intermédiaire A où l'épaisseur des parois de ce profilé 11 est inférieure à l'épaisseur des parois du profilé 11 dans les zones B et C situées de part et d'autre de cette zone intermédiaire A. A titre d'exemple, dans la zone A, les parois du profilé 11 ont une épaisseur de 1,7mm et dans les zones B et C les parois de ce profilé 11 ont une épaisseur de 2,2mm.

Le profilé 11 comporte une partie centrale 12 creuse à section fermée et délimitée d'un côté par une paroi 13 sensiblement plane. Cette paroi 13 est prolongée, sur chacun de ses bords latéraux, par une feuillure, respectivement 14 et 15.

La feuillure 14 comporte une découpe 16 de centrage du montant central 4 et la partie centrale 12 du profilé 11 comporte, au-dessous de cette découpe 16, une lumière 17 de positionnement dudit montant central 4.

Par ailleurs, la feuillure 11 est munie dans sa partie avant et dans sa partie arrière, d'une découpe, respectivement 18 et 19 de centrage d'un organe de levage du véhicule.

La paroi 13 est de préférence placée du côté de l'habitacle du véhicule et le profilé 11 est réalisé par profilage ou hydroformage ou extrusion.

Le longeron de bas de caisse selon l'invention formé d'une seule pièce présente donc un poids réduit par rapport aux longerons classiques qui sont généralement composés de plusieurs pièces, tout en ayant une rigidité optimale lors d'un choc.

## Revendications

1. Longeron (10) de bas de caisse d'un flanc (1) de carrosserie de véhicule automobile, ledit flanc (1) comprenant au moins une ouverture (2) délimitée par un arc de pavillon (3), le longeron (10) de bas de caisse et un montant central (4) reliant ledit arc de pavillon (3) et ledit longeron (10), **caractérisé en ce qu'**il est formé par une pièce monobloc comportant un profilé (11) en aluminium ou ses alliages présentant, sur sa longueur, des portions d'épaisseur de parois variable en fonction de la rigidité à obtenir dans des zones déterminées.

2. Longeron selon la revendication 1, **caractérisé en ce que** le profilé (10) comporte une partie centrale (12) creuse à section fermée et délimitée d'un côté par une paroi (13) sensiblement plane.

3. Longeron selon la revendication 2, **caractérisé en ce que** la paroi (13) est prolongée, sur chacun de ses bords latéraux, par une feuillure (14, 15).

4. Longeron selon l'une quelconque des revendications précédentes, **caractérisé en ce que** l'une (14) des feuillures comporte une découpe (16) de centrage du montant central (4).

5. Longeron selon l'une quelconque des revendications précédentes, **caractérisé en ce que** la partie centrale (12) du profilé (11) comporte, au-dessous de la découpe (16), une lumière (17) de positionnement du montant central (4).

6. Longeron selon l'une quelconque des revendications. 1 à 3, **caractérisé en ce que** l'autre (15) desdites feuillures comporte, dans sa partie avant et dans sa partie arrière, une découpe (18, 19) de centrage d'un organe de levage du véhicule.

7. Longeron selon l'une quelconque des revendications précédentes, **caractérisé en ce qu'**il est formé par profilage ou hydroformage ou extrusion.

8. Flanc de carrosserie de véhicule automobile, **caractérisé en ce qu'**il comporte un longeron (10) de bas de caisse selon l'une quelconque des revendications précédentes.

## Patentansprüche

1. Karosseriebodenseitenträger (10) für eine Karosserieseite (1) eines Kraftfahrzeugs, wobei die Seite (1) zumindest eine Öffnung (2) aufweist, welche von einem Dachbogen (3), dem Karosseriebodenseitenträger (10) und einer zentralen Säule (4) begrenzt ist, welche den Dachbogen (3) und den Seitenträger (10) verbindet, **dadurch gekennzeichnet, dass** er aus einem einzigen Stück gebildet ist mit einem Profil (11) aus Aluminium oder seinen Legierungen, welches über seine Länge Wandabschnitte mit einer Dicke aufweist, die abhängig von der in bestimmten Bereichen zu erzielenden Festigkeit variabel ist.

2. Seitenträger gemäß Anspruch 1, **dadurch gekennzeichnet, dass** das Profil (11) einen zentralen Hohlbereich (12) mit geschlossenem Querschnitt aufweist, der auf einer Seite von einer praktisch ebenen Wand (13) begrenzt ist.

3. Seitenträger gemäß Anspruch 2, **dadurch gekennzeichnet, dass** die Wand (13) an jeder ihrer Seitenkanten von einem Falz (14, 15) verlängert ist.

4. Seitenträger gemäß irgendeinem der vorherigen Ansprüche, **dadurch gekennzeichnet, dass** der eine (14) der Falze einen Zentrierausschnitt (16) für die zentrale Säule (4) aufweist.

5. Seitenträger gemäß irgendeinem der vorherigen Ansprüche, **dadurch gekennzeichnet, dass** der zentrale Bereich (12) des Profils (11) unterhalb des Ausschnitts (16) ein Schlitzloch (17) zur Positionierung der zentralen Säule (4) aufweist.

6. Seitenträger gemäß irgendeinem der Ansprüche 1 bis 3, **dadurch gekennzeichnet, dass** der andere (15) der Falze in seinem vorderen Bereich und seinem hinteren Bereich einen Zentrierausschnitt (18, 19) für ein Hebeorgan des Fahrzeugs aufweist.

7. Seitenträger gemäß irgendeinem der vorherigen Ansprüche, **dadurch gekennzeichnet, dass** er durch Profilierung oder Hydroforming oder Extrudieren hergestellt wird.

8. Karosserieseite eines Kraftfahrzeugs, **dadurch gekennzeichnet, dass** sie einen Karosseriebodenseitenträger (10) gemäß irgendeinem der vorherigen Ansprüche aufweist.

## Claims

1. Side sill (10) of a rocker panel for the side (1) of a motor vehicle body, said side (1) comprising at least one opening (2) bounded by a roof arch (3), the rocker panel side sill (10) and a central pillar (4) connecting said roof arch (3) and said side sill (10), **characterised in that** it is formed by a single part comprising a profiled member (11) of aluminium or an alloy thereof, having sections of variable wall thickness over its length according to the rigidity to be achieved in specified zones.

2. Side sill according to claim 1, **characterised in that** the profiled member (10) comprises a hollow central part (12) with a closed cross-section bounded on one side by a substantially flat wall (13).

3. Side sill according to claim 2, **characterised in that** the wall (13) is extended, on each of its side edges, by a rebate (14, 15).

4. Side sill according to any one of the preceding claims, **characterised in that** one (14) of the rebates comprises a cutout (16) for centring the central pillar (4).

5. Side sill according to any one of the preceding claims, **characterised in that** the central part (12) of the profiled member (11) comprises, below the cutout (16), an opening (17) for positioning the central pillar (4).

6. Side sill according to any one of claims 1 to 3, **characterised in that** the other one (15) of the rebates comprises, in its front part and in its rear part, a cutout (18, 19) for centring lifting means for the vehicle.

7. Side sill according to any one of the preceding claims, **characterised in that** it is formed by profiling or hydroforming or extrusion.

8. Side of a motor vehicle body, **characterised in that** it comprises a rocker panel side sill (10) according to one of the preceding claims.
